# EUROPEAN PATENT APPLICATION

(11) **EP 2 164 188 A1**
(43) Date of publication of application: **17.03.2010**
(21) Application number: 07721610.9
(22) Date of filing: 29.06.2007
(51) Int. Cl.: H04B 7/14

(54) **A METHOD AND AN EQUIPMENT FOR TRANSMITTING DATA IN THE RELAY STATION AND THE BASE STATION**

(71) Applicant: Alcatel Lucent, 75008 Paris (FR)
(72) Inventor: NI, Wei, Shanghai 201206 (CN); SHI, Qing, Shanghai 201206 (CN); ZHANG, Kaibin, Shanghai 201206 (CN); SHEN, Gang, Shanghai 201206 (CN)
(74) Representative: Schäfer, Wolfgang
(86) International application number: PCT/CN2007/002046
(87) International publication number: WO 2009/003311

(57) **Abstract**

A new data packet transmission solution is provided in the present invention. Firstly, a source network equipment sends a duplicate of a data packet to a sponsor relay station and other one or more assistant relay stations; then the one or more assistant relay stations transmit the duplicate of the data packet received to the sponsor relay station. After the sponsor relay station receives the duplicate directly transmitted by the source and a plurality of duplicates which are transmitted by one or more assistant relay stations, it applies a joint processing of several duplicates of the data packet, and then transmits the result of the joint processing to a corresponding network equipment. Preferably, after one or more assistant relay stations transmit the duplicates of the data packet to the sponsor relay station, the destination network equipment also receives one or more duplicates, and applies a joint processing of the one or more duplicates and a duplicate of the data packet which is received from the sponsor relay station.

## Description

### Technical field

The present invention relates to a relay network of wireless communication, and particularly relates to methods and equipments for transmitting data in the relay station and the base station of the relay network of wireless communication.

### Background

Hybrid automatic retransmission is a mature technique, which is a retransmission mechanism for compensating for the deterioration of receiving bit error rate and frame error rate due to fast fading and shading, and is applied to the multi-hop relay network.

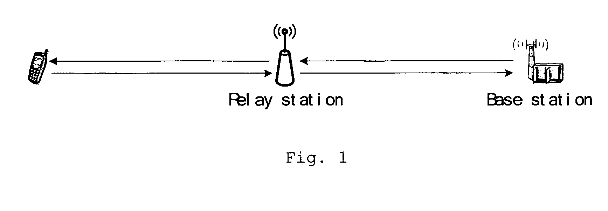

However, for the current multi-hop relay network, a data packet of some node needs to be retransmitted as long as some error occurs to the result of its cyclic redundancy check. Referring to the relay network in Fig.1, during the period of the uplink frame, a relay station receives a data packet from a mobile station, and if error occurs to the result of cyclic redundancy checking of the data packet, relay station sends a receiving indication message for indicating the erroneously-received data packet to a base station so as to request the data packet to be retransmitted. In the follow-up downlink frame, the relay station sends a reply message indicating the receiving error of the transmitted data packet to the mobile station. And in the follow-up uplink frame, the base station allocates resource to retransmit the data packet according to the receiving indication message from the relay station, then the new round of transmission of the data packet is put into action. The above retransmission of the data packet is in an ideal state that retransmission follows the last transmission of the data packet without interval. Actually, when base station is allocating resource for retransmission, maybe several uplink/downlink frame durations has passed since the 1^{st} time transmission of the data packet. Therefore, retransmission of the data packet leads to extra transmission delay. In the current multi-hop relay network topology depicted in Fig.1, there is only one wireless link between the relay station and the mobile station, so, when transmission condition of the wireless link channel deteriorates, transmission error of the data packet will be a high probability event, which will introduce a extra delay into the transmission of the data packet.

### Summary of the invention

To solve the deficiency of the current multi-hop relay station, a new data packet transmission solution is provided in the present invention. Firstly, a source network equipment sends a duplicate of a data packet to a sponsor relay station and other one or more assistant relay stations; then the one or more assistant relay stations transmit the duplicate of the data packet received to the sponsor relay station. After the sponsor relay station receives the duplicate directly transmitted by the source and a plurality of duplicates which are transmitted by one or more assistant relay stations, it applies a joint processing of several duplicates of the data packet, and then transmits the result of the joint processing to a corresponding network equipment. Preferably, after one or more assistant relay stations transmit the duplicates of the data packet to the sponsor relay station, the destination network equipment also receives one or more duplicates, and applies a joint processing of the one or more duplicates and a duplicate of the data packet which is received from the sponsor relay station.

According to a first aspect of the present invention, a method for transmitting data in a sponsor relay station in the wireless network is provided, including the following steps: b. receiving a plurality of duplicates of the data packet from a source network equipment via a plurality of different transmission paths; c. applying a joint processing to the plurality of duplicates of the data packet, and transmitting the result of the joint processing to a corresponding network equipment.

According to a second aspect of the present invention, a method for allocating resource for data transmission in the base station in the wireless network is provided, including the following steps:
i. allocating transmission resources respectively for a source network equipment, a sponsor relay station, one or more assistant relay stations and a destination network equipment, in order that
   with the allocated resources, the source network equipment transmits a duplicate of data packet to the sponsor relay station and the one or more assistant relay stations, and by utilizing the allocated transmission resource, the one or more assistant relay stations transmits the duplicate, received from the source network equipment, of the data packet to the sponsor relay station; after the sponsor relay station receives the plurality of duplicates of the data packet, the sponsor relay station applies a joint processing to the plurality of duplicates of the data packet, and transmits result of the joint processing to a corresponding network equipment by utilizing the allocated transmission resources.

According to a third aspect of the present invention, there is provided a transmission device for data transmission in a sponsor relay station in the wireless network, comprising: a first receiving means configured to receive a plurality of duplicates of data packet from a source network equipment via a plurality of different transmission paths; joint processing & transmitting means configured to apply a joint processing to the plurality of duplicates of the data packet, and transmitting the result of the joint processing to corresponding network equipment.

According to a fourth aspect of the present invention, there is provided a resource allocating device for allocating resources for data transmission in the base station in the wireless network, comprising: allocating means configured to allocate transmission resources respectively for a source network equipment, a sponsor relay station, one or more assistant relay stations and a destination network equipment so that
with the allocated resources, the source network equipment transmits a duplicate of the data packet to the sponsor relay station and the one or more assistant relay stations, and by utilizing the allocated transmission resource, the one or more assistant relay stations transmits duplicate, received from the source network equipment, of the data packet to the sponsor relay station; after the sponsor relay station receives plurality of duplicates of the data packet, the sponsor relay station applies the joint processing to the plurality of duplicates of the data packet, and transmits result of the joint processing to a corresponding network equipment by utilizing the allocated transmission resources.

With the introduction of a assistant relay station and utilization of spatial diversity in the present invention, in comparison with the data transmission solution with network topology depicted in Fig.1, correct rate of data transmission is improved for multi-hop relay station, consequently the transmission delay is diminished, and the utilization ratio of wireless resources is improved.

### Brief description of the drawings

Features, aspects and advantages of the present invention will become obvious by reading the following description of non-limiting embodiments with the aid of appended drawings. Wherein, same or similar reference numerals refer to the same or similar steps or means.
Figure 1 shows a diagram of 2-hop relay network topology in wireless network of prior art;
Figure 2 shows a diagram of 2-hop relay network topology in wireless network according to one embodiment of the present invention;
Figure 3 shows a scenario of uplink transmission of a single-time data packet transmission in 2-hop relay network topology in wireless network according to one embodiment of the present invention;
Figure 4 shows a scenario of downlink transmission of a single-time data packet transmission in 2-hop relay network topology in wireless network according to one embodiment of the present invention;
Figure 5 shows a diagram of another 2-hop relay network topology in wireless network according to one embodiment of the present invention;
Figure 6 shows a diagram of multi-hop relay network topology in wireless network according to one embodiment of the present invention;
Figure 7 shows a diagram of another multi-hop relay network topology in wireless network according to one embodiment of the present invention;
Figure 8 shows a scenario of uplink transmission of the first-time data packet transmission in active Hybrid Automatic Retransmission in 2-hop relay network topology in wireless network according to one embodiment of the present invention;
Figure 9 shows a scenario of downlink transmission of the first-time data packet transmission in active Hybrid Automatic Retransmission in 2-hop relay network topology in wireless network according to one embodiment of the present invention;
Figure 10 shows a scenario of uplink transmission of the first-time data packet transmission in passive Hybrid Automatic Retransmission in 2-hop relay network topology in wireless network according to one embodiment of the present invention;
Figure 11 shows a scenario of downlink transmission of the first-time data packet transmission in passive Hybrid Automatic Retransmission in 2-hop relay network topology in wireless network according to one embodiment of the present invention;
Figure 12 shows a flow chart of data transmission in sponsor relay station in wireless network according to one embodiment of the present invention;
Figure 13 shows a flow chart of sub steps of step of joint processing and transmission in sponsor relay station in wireless network according to one embodiment of the present invention;
Figure 14 shows a flow chart of another sub steps of step of joint processing and transmission in sponsor relay station in wireless network according to one embodiment of the present invention;
Figure 15 shows a diagram of allocation of transmission resource according to one embodiment of the present invention;
Figure 16 shows a flow chart of for data transmission in a base station used as a destination network equipment of data transmission in wireless network according to one embodiment of the present invention;
Figure 17 shows a function block diagram of a transmission device for data transmission in sponsor relay station in wireless network according to one embodiment of the present invention;
Figure 18 shows a function block diagram of resource allocating device for resources allocation for data transmission in a base station in wireless network according to one embodiment of the present invention.

### Detailed description of embodiments

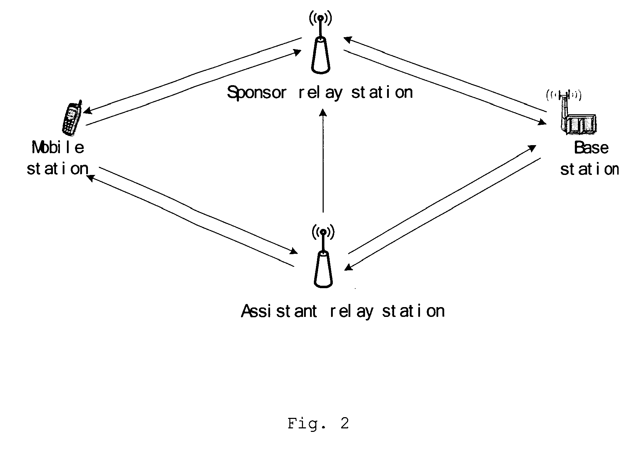

Figure 2 shows a diagram of a network topology according to one embodiment of the present invention, which comprises: a mobile station, a sponsor relay station, a assistant relay station and a base station. It should be noted that, it is just for the purpose of differentiating the two kinds of relay station having different functions with the concept of sponsor relay station and assistant relay station. A relay station in prior art into which the functionalities of the sponsor relay station in present invention are added leads to a sponsor relay station in present invention. The functionalities of a assistant relay station in present invention can be implemented by a relay station in prior art, that is, there is no difference between the assistant relay station in present invention and the relay station in prior art.

The solution in the present invention applies for both single-time transmission of data packet and hybrid automatic retransmission of data packet. In the solution of the present invention, with the simplicity and cost being taken into account, allocations of wireless transmission resource of data transmission is all performed by the base station. UL/DL MAP, as shown in the drawings, represents UpLink/DownLink control mapping information, that is, the information of transmission resource allocated by the Base station. The Mobile station, the sponsor relay station and the assistant relay station receive and transmit data/management signaling according to transmission resource information specified by the UpLink/DownLink mapping information. Transmission resource information includes time and frequency domain resource information, modulation mode, coded format and so on.

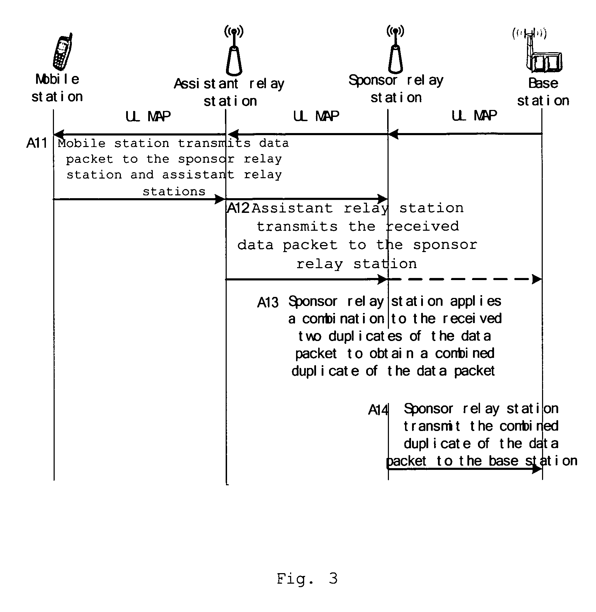

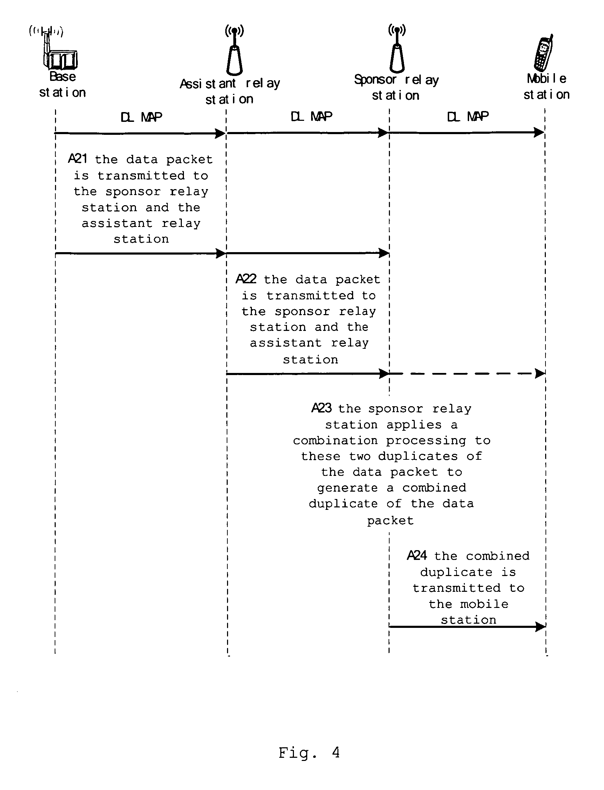

The single-time transmission of a data packet in the UpLink/DownLink is depicted as bellow according to Fig.3 and Fig.4 in combination with Fig.2.

### UpLink single-time transmission of the data packet

Firstly, in step A11, the mobile station transmits the data packet to the sponsor relay station and the assistant relay station via the transmission resource allocated by the base station. And then in step A12, the data packet is transmitted to the sponsor relay station by the assistant relay station via the transmission resource allocated by base station after the assistant relay station receives the data packet.

After the sponsor relay station receives successively the duplicates of the data packets respectively from the mobile station and the assistant relay station, in step A13, the sponsor relay station applies a combination processing of these two duplicates of the data packet to generate a combined duplicate of the data packet. Then, in step A14, the sponsor relay station transmits the combined duplicate to the base station by utilizing the transmission resources allocated by the base station. By this way, one time of uplink transmission of the data packet is completed.

Preferably, in step A12, the assistant relay station may also transmit the data packet to the base station as shown by dotted arrow in Fig.3. After the base station receives the combined duplicate from the sponsor relay station, a combination processing is applied, by the base station, to the duplicate from assistant relay station and the combined duplicate from the sponsor relay station. By this way, spatial diversity is utilized twice during the course of one time transmission to greatly improve the transmission accuracy rate of the data packet.

### DownLink single-time transmission of the data packet

Firstly, in step A21, the data packet is transmitted to the sponsor relay station and the assistant relay station. And then in step A22, the data packet is transmitted to the sponsor relay station by the assistant relay station via the transmission resource allocated by base station after the assistant relay station receive the data packet.

After the sponsor relay station receives the duplicates of data packets respectively from the mobile station and the assistant relay station, in step A23, the sponsor relay station applies a combination processing to these two duplicates of the data packet to generate a combined duplicate of the data packet. Then, in step A24, the combined duplicate is transmitted to the mobile station by utilizing the transmission resources allocated by the base station. By this way, one time of downlink transmission of the data packet is completed.

Preferably, in step A22, the assistant relay station may also transmit the data packet to the mobile station as shown by dotted arrow in Fig.4. After the mobile station receives the combined duplicate from the sponsor relay station, a combination processing is applied, by the mobile station, to the duplicate from the assistant relay station and the combined duplicate from the sponsor relay station. By this way, spatial diversity is utilized twice during the course of one time transmission of the data packet to greatly improve the transmission accuracy rate of the data packet. Certainly, a relatively high performance of the mobile station may be needed for the above case. Within the scope of the prior art, the abovementioned combination processing may be not supported by the some mobile station.

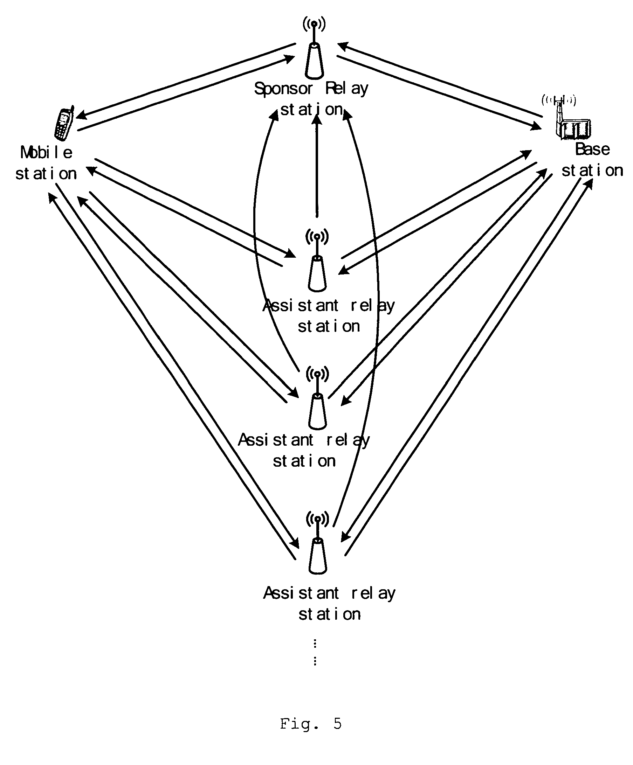

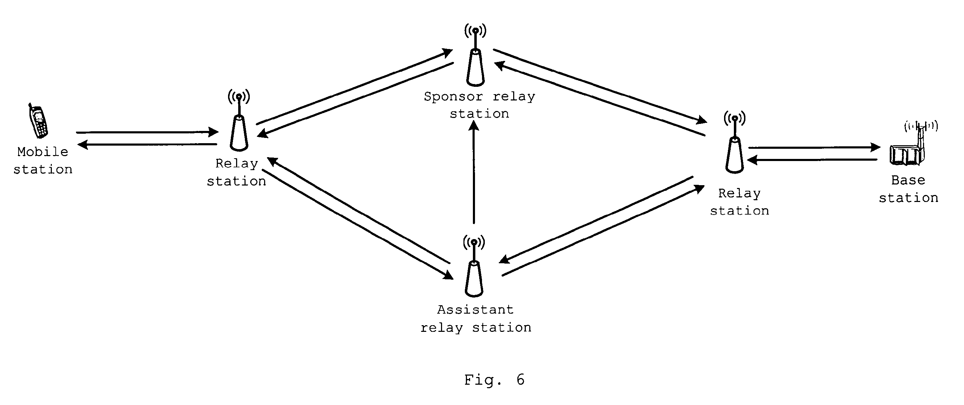

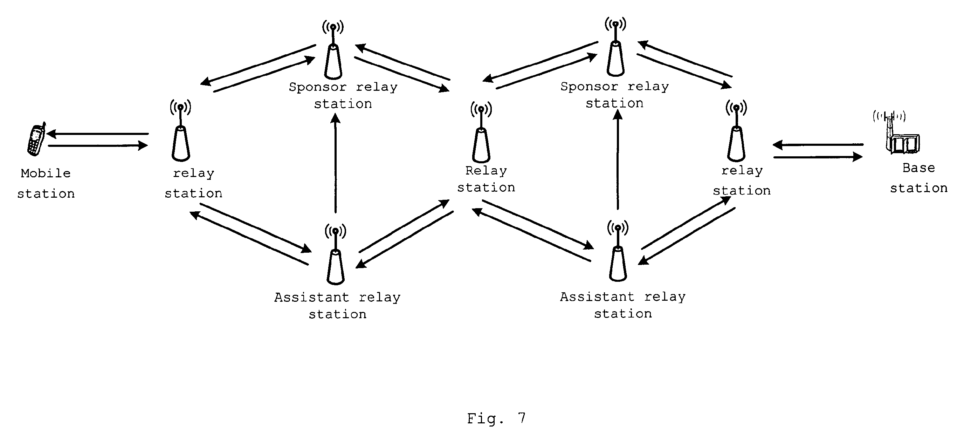

Although Fig. 2 shows a topology diagram of 2-hop relay network with a assistant relay station. Those skilled in the art will appreciate that the present invention is not limited to topology shown in Fig.2. The method in present invention can also apply to the case shown in Fig.5 where a plurality of assistant relay stations are involved, and the source network equipment and the destination network equipment are not limited to the base station or the mobile station, a relay station can also be used as a source network equipment or destination network equipment, as shown in Fig.6. In Fig.6, a plurality of relay stations can be constructed between the mobile station and the relay station or between the relay station and the base station. The network topology of data transmission in Fig.2 may be cascaded, as shown in Fig.7. It is to be understood by those skilled in the art that the present invention is not limited to the network topology depicted in Fig.2 and Fig.5 to Fig.7, and various modifications or combinations can be made without departing from the scope and spirit of the scope of the network topology depicted in Fig.2 and Fig.5 to Fig.7.

It should be noted that the modulation mode of the abovementioned plurality of duplicates of the data packet may be different. For example, while source network equipment transmits a data packet to the sponsor relay station and the assistant relay stations, the 16QAM modulation may be adopted; then while the assistant relay stations transmit the data packet to the sponsor relay station, the 64QAM modulation may be adopted. After a Log likelihood ratio demodulation and combination processing is performed on the 2 duplicates of the received data packet by the sponsor relay station, then decoding and checking is applied to them. The adopted combination mode is not limited in present invention, for example, Chase Combining (CC) or Incremental Redundancy (IR) combination can be applicable.

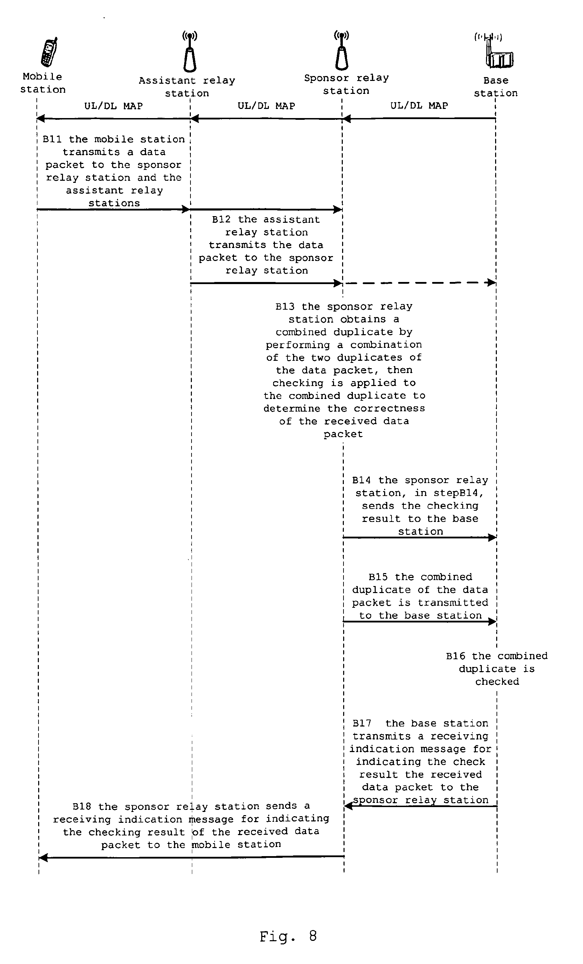

As depicted above, present invention applied to single-time transmission of the data packet is described. And present invention's application to hybrid automatic retransmission is described as bellow in conjunction with Fig.8 to Fig.11 and Fig.2.

According to whether a verification is applied to, by the sponsor relay station, the combination of the plurality of duplicates of the data packet and receiving indication message for indicating the correctness of the received data packet is sent depending upon the verification result, the hybrid automatic retransmission may fall into two categories: active hybrid automatic retransmission and negative hybrid automatic retransmission.

### 1. Active hybrid automatic retransmission

According to embodiments of present invention, the active hybrid automatic retransmission is **characterized in that** after the sponsor relay station receives a plurality of duplicates transmitted by the source network equipment via a plurality of different transmission paths, the sponsor relay station obtains a combined duplicate by performing combination on the plurality of duplicates, and applies a check to the combined duplicate to determine the correctness of the received data packet, then sends the checking result to the source network equipment and the base station, wherein the source network equipment includes a mobile station, a relay station or a base station.

### 1.1 UpLink transmission of a data packet

Taking the network topology shown in Fig.2 for an example, detailed description is presented as follows, with reference to Fig. 8, for the uplink transmission of the data packet in the active hybrid automatic retransmission.

Firstly, in step B11, via the allocated resources by the base station, the mobile station transmits a data packet to the sponsor relay station and the assistant relay stations. And after the assistant relay station receives the data packet, then in step B12, it transmits the data packet to the sponsor relay station by utilizing the transmission resource allocated by the base station.

After the sponsor relay station receives the 2 duplicates of the data packet respectively from the mobile station and the assistant relay station, in step B13, the sponsor relay station obtains a combined duplicate by performing a combination of the two duplicates of the data packet, then checking is applied to the combined duplicate to determine the correctness of the received data packet. There is no limit for particular checking mode being used, which is adopted depending on the checking mode used by transmitter. CRC is the most popular checking mode at present. After checking, the sponsor relay station, in stepB14, sends the checking result to the base station and the mobile station. There are provided two methods for the transmission of the data packet in the sponsor relay station, of which one is to determine whether the combined duplicate is transmitted to the base station or not depending on the checking result, i.e., if the checking result is correct, then in step B15, the combined duplicate of the data packet is transmitted to the base station, if the checking result is wrong, transmission of the combined duplicate of the data packet is canceled; the other method is that in step B15, the combined duplicate of the data packet is always transmitted to the base station regardless of the correctness of the checking result. And it should be noted that steps B14 and B15 can be performed in no particular order.

If no transmission of the combined duplicate of the data packet happens because of the wrong checking result of the data packet of the sponsor relay station, then, in step B18, the sponsor relay station sends a receiving indication message for indicating the checking error of the received data packet to the mobile station. Then, resources are allocated for the retransmission of the data packet by the base station, wherein the resources may be allocated in the same way with the 1^{st} transmission of the data packet.

If the sponsor relay station transmits the combined duplicate of the data packet to the base station, then after the base station receives the combined duplicate, the combined duplicate is checked in step B16. preferably, the base station can also receive a duplicate of the data packet transmitted by the assistant relay station in step B12, and applies a combination process to the combined duplicate of the data packet from the sponsor relay station and the duplicate of the data packet from assistant relay station to obtain a combined data packet and checking is also applied to the combined data packet. In step B17, the base station transmits a receiving indication message for indicating the correctness of the received data packet to the sponsor relay station. Preferably, the base station also transmits a receiving indication message for indicating the correctness of the received data packet to the assistant relay station.

After the sponsor relay station receives a receiving indication message for indicating the correctness of the received data packet from the base station, if either checking result of the data packet in the base station or checking result of the data packet in the sponsor relay station is correct, then in step B18, the sponsor relay station sends a receiving indication message for indicating correctness of the checking result of the received data packet to the mobile station. If neither checking result of the data packet from the base station nor checking result of the data packet from the sponsor relay station is correct, then in step B18, the sponsor relay station sends a receiving indication message for indicating error of the checking result of the received data packet to the mobile station.

The 1^{st} time transmission and the notification of the checking result of the data packet are finished as described in above process.

If the checking result in the base station is correct, that is, the data packet is received correctly by the base station, then transmission of the data packet is finished.

If the data packet is received wrongly by both the base station and the sponsor relay station, then, resources are allocated, by the base station, to the mobile station, the assistant relay station and the sponsor relay station for the retransmission of the data packet (the steps of retransmission by the mobile station is not shown in Fig.8 for simplicity), wherein the retransmission processing can be the same with, or a little bit different from, the retransmission processing shown in Fig.8. In the processing of the 2^{nd} time transmission, after the sponsor relay station receives the two duplicates of the data packet respectively from the mobile station and the assistant relay station, then, sequentially, combination process and check may be applied to the two duplicates of the data packet, or a further combination can be applied to the combination result of the two duplicates and the combined duplicate in the 1^{st} transmission, and then checking is applied to result of the further combination. Likewise, in the 2^{nd} time transmission process, after the base station receives a combined duplicate of the data packet from the sponsor relay station, then, a combination process and check may be applied to the combined duplicate received in the 2^{nd} time data transmission and the combined duplicate received in the 1^{st} time data transmission; or a combination process and check may be applied by the base station to a combined duplicate of the data packet from the sponsor relay station and a duplicate from the assistant relay station, after the base station receive these two duplicates, or a further combination can be applied to the combination result of the two duplicates and the combined duplicate in the 1^{st} time data transmission, and then check is applied to result of the further combination.

If the data packet is wrongly received by the base station but correctly received by the sponsor relay station, then, resources are allocated, by the base station, to the sponsor relay station for the retransmission of the data packet (the steps of retransmission by the sponsor relay station is not shown in Fig.8 for simplicity). The sponsor relay station conducts the 2^{nd} time transmission of the combined duplicate of the data packet, and then after the base station receives the combined duplicate, a further combination is applied to the combined duplicate and the duplicate received in the 1^{st} time transmission to obtain a combined data packet. And after check is applied to the combined data packet, the checking result is sent to the sponsor relay station.

Preferably, when the data packet is wrongly received by the base station but correctly received by the sponsor relay station, then, resources are allocated, by the base station, to the sponsor relay station and meanwhile also to the assistant relay station, for the retransmission of the data packet. In the 2^{nd} time data transmission, a combination processing and checking may be applied, by the base station, to the combined duplicate of the data packet from the sponsor relay station and the duplicate from the assistant relay station, after the base station receive these two duplicates, or a further combination can be applied to the combination result of the two duplicates and the combined duplicate in the 1^{st} transmission, and then checking is applied to result of the further combination. And the checking result is sent to the sponsor relay station and the assistant relay station.

Retransmission will be continued in the above mobile station, the sponsor relay station and the assistant relay station in the foregoing way until the base station receives the data packet correctly, or the transmission of the data packet is quit after retransmission time reaches the predetermined maximum value.

### 1.2 DownLink transmission of a data packet

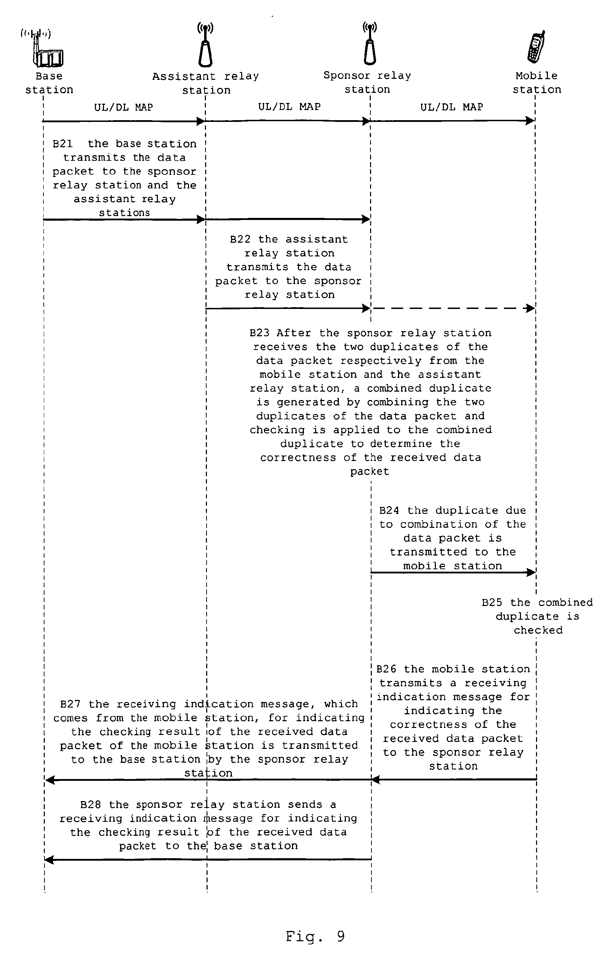

Taking the network topology shown in Fig.2 for an example, detailed description is presented, in reference to Fig. 9, as follows for the downlink transmission of the data packet in the active hybrid automatic retransmission.

Firstly, in step B21, the base station transmits, via the allocated resources by itself, the data packet to the sponsor relay station and the assistant relay stations; and after the assistant relay station receives the data packet, then in step B22, the assistant relay station transmits the data packet to the sponsor relay station by utilizing the transmission resource allocated by the base station.

After the sponsor relay station receives the two duplicates of the data packet respectively from the mobile station and the assistant relay station, a combined duplicate is generated by combining the two duplicates of the data packet in step B23, and checking is applied to the combined duplicate to determine the correctness of the received data packet. There is no limit for particular checking mode being used, which is adopted depending on the checking mode used by transmitter. CRC is most popular checking mode at present.

There are provided two processing modes for the transmission of the data packet in the sponsor relay station, of which one is to determine whether the data packet should be transmitted to the base station or not depending on the checking result, that is, if the checking result is correct, then in step B24, the duplicate due to combination of the data packet is transmitted to the mobile station, if the checking result is wrong, transmission of the combined duplicate of the data packet is canceled; the other processing mode is that in step B24, the combined duplicate of the data packet is always transmitted to the mobile station regardless of the correctness of the checking result.

If no transmission, to the mobile station, of the combined duplicate of the data packet is performed because of the wrong checking result of the data packet of the sponsor relay station, then, in step B28, the sponsor relay station sends a receiving indication message for indicating the checking error of the received data packet to the base station. Then, resources are allocated for the retransmission of the data packet by the base station, wherein the resources may be allocated in the same way with the 1^{st} time transmission of the data packet.

If the sponsor relay station transmits the combined duplicate of the data packet to the mobile station, then after the mobile station receives the combined duplicate, the combined duplicate is checked in step B25. Preferably, the mobile station can also receive the duplicate of the data packet transmitted by the assistant relay station in step B22, and applies a combination processing to the combined duplicate of the data packet from the sponsor relay station and the duplicate of the data packet from assistant relay station to obtain a combined data packet. Checking is also applied to the combined data packet. In step B26, the mobile station transmits a receiving indication message for indicating the correctness of the received data packet to the sponsor relay station. Preferably, the mobile station also transmits a receiving indication message for indicating the correctness of the received data packet to the assistant relay station.

The sponsor relay station may send a receiving indication message, for indicating the checking result of the data packet received by itself, to the base station, or may determine, with reference to the checking result of the data packet of the mobile station, to send the corresponding receiving indication message. Specifically, after the sponsor relay station receives a receiving indication message for indicating the correctness of the received data packet from the mobile station, if either checking result of the data packet from the mobile station or checking result of the data packet from the sponsor relay station is correct, then in step B28, the sponsor relay station sends a receiving indication message for indicating correct checking of the received data packet to the base station. Otherwise, the sponsor relay station sends a receiving indication message, for indicating the checking error of the data packet, to the base station.

Meanwhile, in step B27, the receiving indication message, which comes from the mobile station, for indicating the checking error of the received data packet of the mobile station is transmitted to the base station by the sponsor relay station.

And it should be noted that step B27 and B28 can be preformed in no particular order.

The 1^{st} time transmission and the notification of the correctness of the data packet are finished as described in above process.

If the checking result in the mobile station is correct, that is, the data packet is received correctly by the mobile station, then transmission of the data packet is finished.

If the data packet is received wrongly by both the mobile station and the sponsor relay station, then, resources are allocated, by the base station, to the mobile station, the assistant relay station and the sponsor relay station for the retransmission of the data packet (the steps of retransmission by the mobile station is not shown in Fig.9 for simplicity), wherein the retransmission processing can be the same with, or a little bit different from, the retransmission processing shown in Fig. 9. In the processing of the 2^{nd} time transmission, after the sponsor relay station receives the two duplicates of the data packet respectively from the base station and the assistant relay station, then, a combination processing and checking may be applied to the two duplicates of the data packet, or a further combination can be applied to the combination result of the two duplicates and the combined duplicate in the 1^{st} transmission, and then checking is applied to result of the further combination. Likewise, in the 2^{nd} time transmission process, after the mobile station receives a combined duplicate of the data packet coming from the sponsor relay station, then, a combination processing and checking may be applied to the above combined duplicate received in the 2^{nd} time data transmission and the combined duplicate received in the 1^{st} time data transmission, or a combination processing and checking may be applied, by the mobile station, to a combined duplicate of the data packet coming from the sponsor relay station and a duplicate from the assistant relay station, after the mobile station receive these above two duplicates, or a further combination can be applied to the combination result of the two duplicates and the combined duplicate in the 1^{st} transmission, and then checking is applied to result of the further combination. Then, a receiving indication message, for indicating the checking result of the data packet received by the mobile station, is transmitted to the sponsor relay station, and then forwarded to the base station by the sponsor relay station.

If the data packet is wrongly received by the mobile station but correctly received by the sponsor relay station, then, resources are allocated, by the base station, to the sponsor relay station for the retransmission of the data packet (the steps of retransmission by the sponsor relay station is not shown in Fig.9 for simplicity). The sponsor relay station conducts the 2^{nd} time transmission of the combined duplicate of the data packet via the resources allocated by the base station. After the mobile station receives the combined duplicate, a further combination is applied to the combined duplicate and the duplicate received in the 1^{st} time transmission to obtain a combined data packet. And after checking is applied to the combined data packet, a receiving indication message, for indicating the checking result of the data packet received by the mobile station, is transmitted to the sponsor relay station, and then forwarded to the base station by the sponsor relay station.

Preferably, while the data packet is wrongly received by the mobile station but correctly received by the sponsor relay station, then, resources are allocated, by the base station, to the sponsor relay station and meanwhile, may also be allocated to the assistant relay station, for the retransmission of the data packet. In the 2^{nd} time transmission, a combination processing and checking may be applied, by the mobile station, to a combined duplicate of the data packet from the sponsor relay station and a duplicate from the assistant relay station, after the mobile station receive these above two duplicates, or a further combination can be applied to the combination result of the above two duplicates and the combined duplicate in the 1^{st} transmission, and then checking is applied to result of the further combination. Then, a receiving indication message, for indicating the checking result of the data packet received by the mobile station, is transmitted to the sponsor relay station, and then forwarded to the base station by the sponsor relay station.

Retransmission will be continued in the above base station or the sponsor relay station, the assistant relay station in the foregoing way until the mobile station receives the data packet correctly, or the transmission of the data packet is quit after retransmission count reaches the predetermined maximum value.

### 2. Passive hybrid automatic retransmission

According to embodiments of present invention, the passive hybrid automatic retransmission is **characterized in that** after the sponsor relay station receives a plurality of duplicates transmitted by the source network equipment via a plurality of different transmission paths, a combined duplicate is generated by combining the plurality of duplicates, and the combined duplicate is directly transmitted to the destination network, wherein the source network equipment includes a mobile station, a relay station and the destination network equipment includes a relay station or a base station; or the source network equipment includes a base station and the destination network equipment includes a mobile station.

### 2.1 UpLink transmission of the data packet

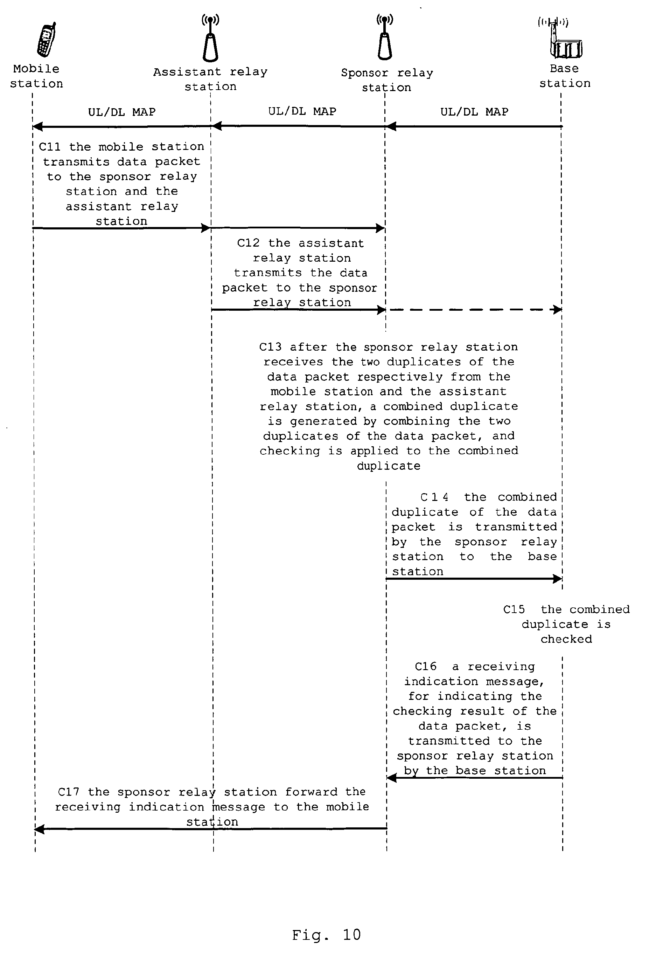

Taking the network topology shown in Fig.2 for an example, detailed description is presented as follows, with reference to Fig. 10, for the uplink transmission of the data packet in the passive hybrid automatic retransmission.

Firstly, in step C11, via the allocated resources by base station, the mobile station transmits data packet to the sponsor relay station and the assistant relay station. After the assistant relay station receives the data packet, then in step C12, the assistant relay station transmits the data packet to the sponsor relay station by utilizing the transmission resource allocated by the base station.

After the sponsor relay station receives the two duplicates of the data packet respectively from the mobile station and the assistant relay station, a combined duplicate is generated by combining the two duplicates of the data packet in step C13. Then, the combined duplicate of the data packet is transmitted by the sponsor relay station, in step C14, to the base station.

After the combined duplicate is received by the base station, the combined duplicate is checked in step C15. Preferably, the base station may receive the duplicate of the data packet transmitted by the assistant relay station in step C12, and a further combination can be applied to the combined duplicate of the data packet from the sponsor relay station and the duplicate from the assistant relay station to obtain a combined data packet, and then checking is applied to result of the further combination. Then, in step C16, a receiving indication message, for indicating the checking result of the data packet, is transmitted to the sponsor relay station by the base station. And after the sponsor relay station receives the receiving indication message, for indicating the checking result of the data packet, from the base station, it forward the receiving indication message to the mobile station in step C17.

The 1^{st} time transmission and the notification of the correctness of the data packet are finished as described in above process.

If the checking result in the base station is correct, that is, the data packet is received correctly by the base station, then transmission of the data packet is finished.

If the data packet is received wrongly by the base station, then, resources are allocated, by the base station, to the mobile station, the assistant relay station and the sponsor relay station for the retransmission of the data packet, and the retransmission processing just follows the above steps (the steps of retransmission by the mobile station is not shown in Fig.10 for simplicity), wherein the retransmission processing can be the same with , or a little bit different from, the retransmission processing shown in Fig.10. In the processing of the 2^{nd} time transmission, after the sponsor relay station receives the two duplicates of the data packet coming respectively from the mobile station and the assistant relay station, then, a combination processing and checking may be applied to the two duplicates of the data packet, or a further combination can be applied to the combination result of the two duplicates and the combined duplicate in the 1^{st} transmission, and then the checking result of the further combination is sent to the base station. Likewise, in the 2^{nd} time transmission process, after the base station receives a combined duplicate of the data packet coming from the sponsor relay station, then, a combination processing and checking may be applied to the above combined duplicate received in the 2^{nd} time transmission and the combined duplicate received in the 1^{st} time transmission; or a combination processing and checking may be applied by the base station to a combined duplicate of the data packet coming from the sponsor relay station and a duplicate from the assistant relay station, after the base station receive these two duplicates; or a further combination can be applied to the combination result of the two duplicates and the combined duplicate in the 1^{st} transmission, and then checking is applied to result of the further combination.

Preferably, in the processing of the 1^{st} time transmission of the data packet, as shown in Fig.10, the sponsor relay station receives, from the base station, the receiving indication message for indicating the checking result of the data packet. If the receiving indication message indicates a correct checking result of the base station, it is transmitted to the mobile station by the sponsor relay station. If the receiving indication message indicates a wrong checking result of the base station, the sponsor relay station determines whether the local checking result of the data packet within the sponsor relay station itself is correct or not. If the local checking result of the data packet is correct, then the receiving indication message indicating a checking error of the data packet of the base station is changed into a receiving indication message indicating a correct checking result of the data packet of the base station, and then sent to the mobile station, which makes the mobile station believe that the base station receives the data packet correctly and there is no need to retransmit the data packet. Retransmission will be conducted only by the sponsor relay station and the assistant relay station.

Retransmission will be continued in the above mobile station, the sponsor relay station and the assistant relay station in the foregoing way until the base station receives the data packet correctly, or the transmission of the data packet is quit after retransmission count reaches the predetermined maximum value.

### 2.2 DownLink transmission of a data packet

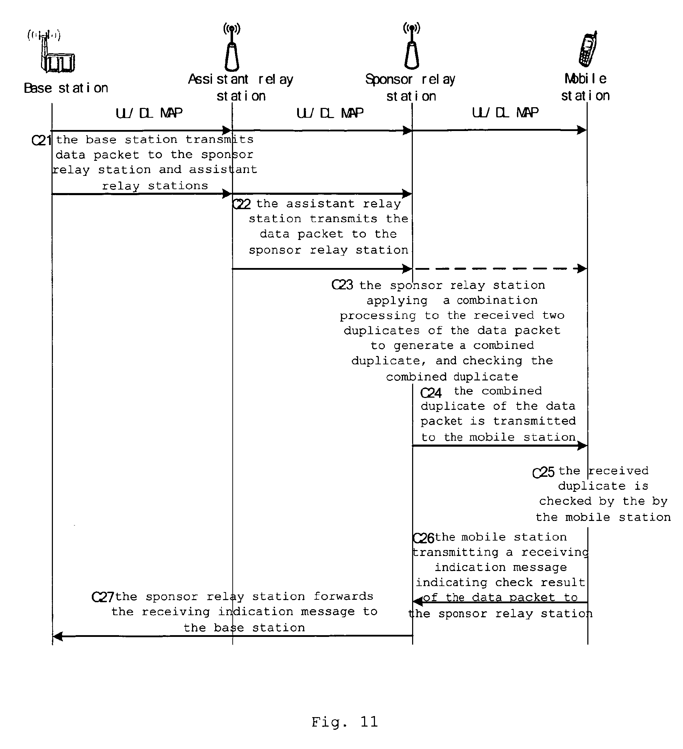

Taking the network topology shown in Fig.2 for an example, detailed description is presented as follows, with reference to Fig. 11, for the uplink transmission of the data packet in the passive hybrid automatic retransmission.

Firstly, in step C21, via the allocated resources by itself, the base station transmits data packet to the sponsor relay station and the assistant relay stations. After the assistant relay station receives the data packet, in step C22, the assistant relay station transmits the data packet to the sponsor relay station by utilizing the transmission resource allocated by the base station.

After the sponsor relay station receives the two duplicates of the data packet respectively from the mobile station and the assistant relay station, a combined duplicate is generated by combining the two duplicates of the data packet in step C23. Then, the combined duplicate of the data packet is transmitted by the sponsor relay station, in step C24, to the mobile station.

After the combined duplicate is received by the mobile station, the combined duplicate is checked in step C25. Preferably, the mobile station may receive the duplicate of the data packet transmitted by the assistant relay station in step C22, and a further combination can be applied to the combined duplicate of the data packet from the sponsor relay station and the duplicate from the assistant relay station to obtain a combined data packet, and then checking is applied to the combined data packet. Then, in step C26, a receiving indication message, for indicating the checking result of the combined data packet, is transmitted to the sponsor relay station by the mobile station. The sponsor relay station forwards the receiving indication message to the base station in step C27.

The 1^{st} time transmission and the notification of the correctness of the data packet are finished as described in above process.

If the checking result in the mobile station is correct, that is, the data packet is received correctly by the mobile station, then transmission of the data packet is finished.

If the data packet is received wrongly by the mobile station, then, resources are allocated, by the base station, to itself, the assistant relay station and the sponsor relay station for the retransmission of the data packet, and the retransmission processing just follows the above steps (the steps of retransmission by the mobile station is not shown in Fig.11 for simplicity), wherein the retransmission processing can be the same with, or a little bit different from, the retransmission processing shown in Fig.10. In the processing of the 2^{nd} time transmission, after the sponsor relay station receives the two duplicates of the data packet coming respectively from the base station and the assistant relay station, then, a combination processing and checking may be applied to the two duplicates of the data packet, or a further combination can be applied to the combination result of the two duplicates and the combined duplicate in the 1^{st} time transmission, and then the combined duplicate of the further combination is sent to the mobile station. Likewise, in the 2^{nd} time transmission process, after the mobile station receives a combined duplicate of the data packet coming from the sponsor relay station, then a combination processing and checking may be applied to the above combined duplicate received in the 2^{nd} time transmission and the combined duplicate received in the 1^{st} time transmission; or a combination processing and checking may be applied by the mobile station to a combined duplicate of the data packet coming from the sponsor relay station and a duplicate from the assistant relay station, after the mobile station receive these two duplicates; or a further combination can be applied to the combination result of the two duplicates and the combined duplicate in the 1^{st} transmission, and then checking is applied to result of the further combination. And a receiving indication message, for indicating the checking result of the data packet of the mobile station, is transmitted to the sponsor relay station by the mobile station. And the sponsor relay station forwards the receiving indication message to the base station.

Retransmission will be continued in the above base station, sponsor relay station and the assistant relay station in the foregoing way until the mobile station receives the data packet correctly, or the transmission of the data packet is quit after retransmission count reaches the predetermined maximum value.

As above, embodiments of the present invention are described in detail from the view of a system process. It should be noted that steps of the method is described from the function perspective in the above embodiments. The sequence of the steps may vary with a different protocol of data link layer or a different protocol of physical layer or a different uplink sub-frame scheduling of the wireless network.

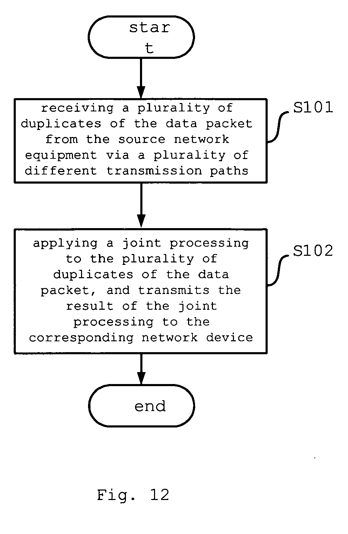

In the following text, a detailed description is presented for embodiments of the present invention from the view of a sponsor relay station and a base station in conjunction with Fig.12 to Fig.16.

Figure 12 shows a flow chart of method for data transmission in a sponsor relay station in wireless network according to one embodiment of the present invention.

Firstly, in step S101, the sponsor relay station receives a plurality of duplicates of a data packet from the source network equipment via a plurality of different transmission paths; then, in step S102, the sponsor relay station applies a joint processing to the plurality of duplicates of the data packet, and transmits the result of the processing to the corresponding network equipment. And the step S101 may be further divided into 2 sub steps as follows (the sub steps is not shown in Fig.12 for simplicity):firstly, the sponsor relay station receives a duplicate of the data packet directly from the source network equipment; then, the sponsor relay station receives one or more duplicates of the data packet from the source network equipment via the one or more assistant relay stations.

Herein, the source network equipment and the destination network equipment may be any one of the pairs of a mobile station and a base station, a mobile station and a relay station, a relay station and a mobile station, a relay station and a relay station, a relay station and a base station, a base station and a mobile station, a base station and a relay station.

For single-time transmission of the data packet, the step S102 can be specified as the sponsor relay station applies a combination processing to the plurality of duplicates to obtain a combined duplicate, and the combined duplicate is transmitted to the destination network equipment.

In hybrid automatic retransmission, if the data packet is received wrongly by the sponsor relay station or the destination network equipment, then resources are allocated, by the base station, to the source network equipment for the retransmission of the data packet. Preferably, before step S101, there is further provided the following steps: the sponsor relay station receives a retransmission indication message, from the base station, for indicating the data packet to be retransmitted by the source network equipment. And during the period of retransmission, the sponsor relay station applies the joint processing to the received the plurality of duplicates of the data packet of the retransmission and the plurality of duplicates of the data packet of previous one or more transmission, and transmits the result of the joint processing to the corresponding network equipment. If the sponsor relay station receives the data packet correctly but the destination receives the data packet wrongly, then, resources are allocated, by the base station, to the sponsor relay station for the retransmission of the data packet. As an alternative embodiment, resources may also be allocated, by the base station, to both the sponsor relay station and the one or more assistant relay stations for the retransmission of the data packet.

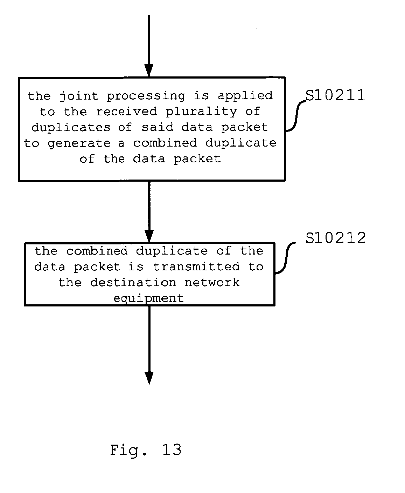

For passive hybrid automatic retransmission, the corresponding network equipment includes the destination network equipment. The above step S102 can be further divided into 2 sub steps S10211 and S10212, as shown in Fig.13.

Firstly, in step S10211, the joint processing is applied to the received plurality of duplicates of the data packet by the sponsor relay station to generate a combined duplicate of the data packet.

Secondly, in step S10212, the combined duplicate of the data packet is transmitted to the destination network equipment by the sponsor relay station.

Checking is applied to the combined duplicate after the destination network equipment receives the combined duplicate of the data packet. Preferably, the destination network equipment also receives one or more duplicates of the data packet from the one or more assistant station, then a combination processing is applied to the one or more duplicates and the combined duplicate from the sponsor relay station to generate a combined data packet, and checking is applied to the combined data packet, then a receiving indication message for indicating the checking result is sent to the sponsor relay station by the destination network equipment.

After the sponsor relay station receives the receiving indication message for indicating whether the data packet is received correctly by the destination network equipment from the destination network equipment, the sponsor relay station sends the receiving indication message to the source network equipment.

When the source network equipment and the destination network equipment are any one of the pairs of a mobile station and a base station, a mobile station and a relay station, a relay station and a mobile station, a relay station and a relay station, a relay station and a base station, preferably, after the sponsor relay station receives the receiving indication message, from the destination network equipment, for indicating the checking result of the data packet, and then if the receiving indication message indicates a correct checking result of the destination network equipment, it is forwarded to the source network equipment by the sponsor relay station. If the receiving indication message indicates a wrong checking result of the destination network equipment, the sponsor relay station determines whether the local checking result of the data packet within the sponsor relay station itself is correct or not. If the local checking result of the data packet is correct, then the receiving indication message indicating a checking error of the data packet of the destination network equipment is changed into a receiving indication message indicating a correct checking result of the data packet of the destination network equipment, and sent to the source network equipment, which makes the source network equipment believe that the destination network equipment receives the data packet correctly and there is no need to retransmit the data packet. Retransmission will be conducted only by the sponsor relay station and the assistant relay station.

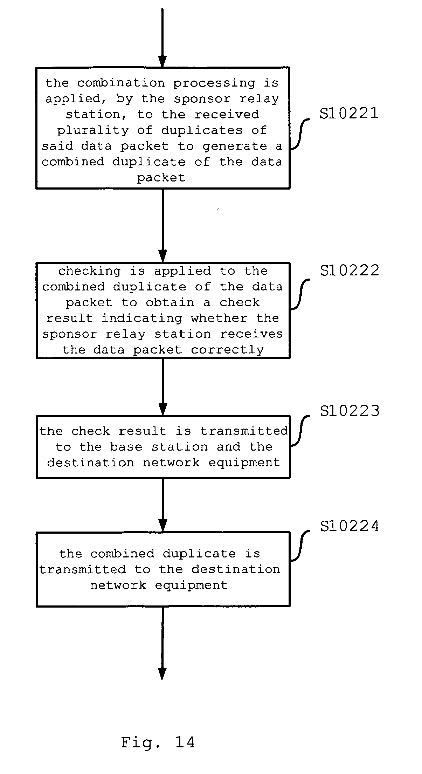

In active hybrid automatic retransmission, the corresponding network equipment includes: the source network equipment, the destination network equipment and the base station. The aforementioned step 102 may be divided into 4 sub steps S10221, S10222, S10223 and S10224, as shown in Fig.14.

Firstly, in step S10221, a combination processing is applied, by the sponsor relay station, to the received plurality of duplicates of the data packet to generate a combined duplicate of the data packet;Secondly, in step S10222, checking is applied to the combined duplicate of the data packet to obtain a checking result indicating whether the sponsor relay station receives the data packet correctly; next, in step S10223, the checking result is transmitted to the base station and the destination network equipment; and finally, in step S10224, the combined duplicate is transmitted to the destination network equipment. It should be noted that step S10223 and step S10224 can be performed without any particular order. As a variation, whether the step S10224 is performed or not depending on the checking result of step s10222, that is, only if the checking result of the data packet indicates that the sponsor relay station receives the data packet correctly, can step S10224 be performed consequently by the sponsor relay station to transmit the combined duplicate of the data packet to the destination network equipment.

It should be noted that steps of the method is described from the function perspective in the above particular embodiments. The sequence of the steps may vary with a different protocol of data link layer or a different protocol of physical layer or a different uplink sub-frame scheduling of the wireless network in practical implementation.

In present wireless communication network, allocation of the wireless transmission resources is performed by the base station to lower the complexity of the relay station and the mobile station, and to facilitate the centralized management and assignment of the wireless transmission resources. According to embodiments of the present invention, the base station allocates transmission resources to the source network equipment, the sponsor relay station, one or more assistant relay stations, and the destination network equipment, respectively, so that the source network equipment transmits a duplicate of the data packet to the sponsor relay station and the one or more assistant relay stations via the allocated transmission resource, and the one or more assistant relay stations transmits the duplicate of the data packet received from the source network equipment to the sponsor relay station via the allocated transmission resource; after receiving the plurality of duplicates of the data packet, the sponsor relay station applies a joint processing to the plurality of duplicates and transmits result of the joint processing to a corresponding network equipment via the allocated transmission resource.

Preferably, transmission resources are allocated, by the base station, to the source network equipment, the sponsor relay station, one or more assistant relay stations, and the destination network equipment, respectively, so that: the source network equipment transmits a duplicate of the data packet to the sponsor relay station and the one or more assistant relay stations via the allocated transmission resource, and the one or more assistant relay stations transmits the duplicate of the data packet received from the source network equipment to the sponsor relay station and the destination network equipment via the allocated transmission resource; after receiving the plurality of duplicates of the data packet, the sponsor relay station applies a joint processing to the plurality of duplicates and transmits result of the joint processing to the corresponding network equipment via the allocated transmission resource.

Herein, the source network equipment and the destination network equipment may be any one of the pairs of a mobile station and a base station, a mobile station and a relay station, a relay station and a mobile station, a relay station and a relay station, a relay station and a base station, a base station and a mobile station, a base station and a relay station.

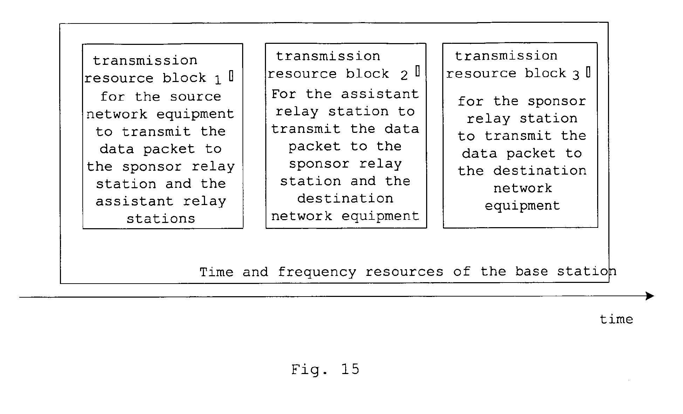

Figure 15 shows a diagram of allocation of transmission resource according to one embodiment of the present invention. Taking the network topology, involved with one assistant relay station, shown in Fig.2 as an example for simplicity, it is to be understood by those skilled in the art that how the base station allocates the resources for the network topology in Fig.5 to Fig.7 or some variation network topology based on the network topology in Fig.5 to Fig.7 according to the teachings of the present invention.

Every time the transmission resources are allocated for transmission of the data packet, transmission resource block 1 is allocated by the base station to source network equipment for the source network equipment to transmit the data packet to the sponsor relay station and the assistant relay stations; and transmission resource block 2 is allocated by the base station to the assistant relay station for the assistant relay station to transmit the data packet to the sponsor relay station and the destination network equipment; and transmission resource block 3 is allocated by the base station to the sponsor relay station for the sponsor relay station to transmit the data packet to the destination network equipment. The timing constraint for the above 3 transmission resource blocks is that: transmission resource block 1 must precede transmission resource block 2, and transmission resource block 2 must precede transmission resource block 3.

It should be noted that since different duplicate of the same data packet can be modulated in different manner, the aforementioned 3 transmission resource blocks may be unequal in size.

For hybrid automatic retransmission, corresponding transmission resource blocks should be allocated by the base station to the destination network and the sponsor relay station to send the receiving indication message for indicating whether the data packet is received correctly.

During the period of active hybrid automatic retransmission, the base station also receives, from the sponsor relay station, a receiving indication message for indicating whether the sponsor relay station receives the data packet from the source network equipment correctly. If the sponsor relay station does not receive the data packet from the source network equipment correctly, then transmission resources are allocated, by the base station, to the source network equipment, the sponsor relay station, one or more assistant relay stations and the destination network equipment for the purpose of retransmission of the data packet, and the resource allocation of retransmission is the same with the resource allocation of the 1^{st} time transmission.

When the sponsor relay station receives the data packet from the source network equipment correctly, the base station determines whether the destination network equipment receives the data packet correctly according to the receiving indication message, which is from the destination network equipment, for indicating the correctness of the checking result of the data packet of the destination network equipment. Certainly, the receiving indication message is unnecessarily to be received by the base station, if base station is the destination network equipment itself. If the destination network equipment does not receive the data packet correctly, then transmission resources are allocated, by the base station, to the sponsor relay station, one or more assistant relay stations for the purpose of retransmission of the data packet.

During the period of passive hybrid automatic retransmission, when the destination network equipment is a mobile station or a relay station, the base station receives, from the destination network equipment, a receiving indication message for indicating whether the destination network equipment receives the data packet from the source network equipment correctly. If the destination network equipment does not receive the data packet from the source network equipment correctly, then transmission resources are allocated by the base station for the purpose of retransmission of the data packet, and the resource allocation of retransmission is the same with the resource allocation of the 1^{st} time transmission.

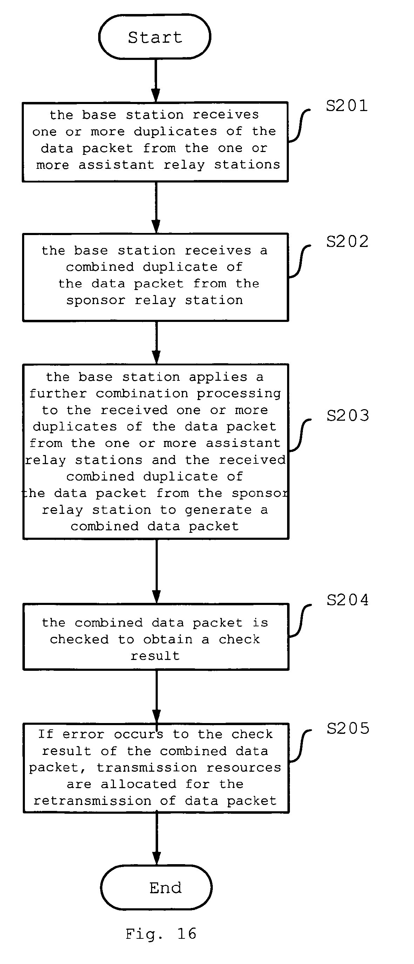

When the base station is the destination network equipment, it is necessary for the base station to perform steps shown in Fig.16.

Firstly, in step S201, the base station receives one or more duplicates of the data packet from the one or more assistant relay stations; then, in step S202, the base station receives a combined duplicate of the data packet from the sponsor relay station; then, in step S203, the base station applies a combination processing to the received one or more duplicates of the data packet from the one or more assistant relay stations and the received combined duplicate of the data packet from the sponsor relay station to generate a combined data packet; in step S204, the combined data packet is checked to obtain a checking result. If error occurs to the checking result of the combined data packet, then in step S205, transmission resources are allocated for the retransmission of the data packet.

It should be noted that during the period of retransmission, in aforementioned step S202, at the time of the retransmission of the data packet, in the above Step S202, after the base station applies a combination processing to the one or more duplicates, received during the retransmission, of the data packet from the one or more assistant relay stations and the combined duplicate of the data packet received from the sponsor relay station to generate a combined data packet, a further combination processing is applied to the above combined data packet and the duplicate combined from the plurality of duplicates of data packet received during last one or more transmission.

In particular, specific flow of the transmission resource allocation in step S205 in the passive hybrid automatic retransmission is different from that in the active hybrid automatic retransmission.

During the active hybrid automatic retransmission, when error occurs to the checking result of the data packet in the base station, if error, at the same time, also occurs to the checking result of the data packet in the sponsor relay station, then transmission resources are allocated, by the base station, to the source network equipment, the sponsor relay station, one or more assistant relay stations and the destination network equipment for the purpose of retransmission of the data packet, and the resource allocation of retransmission is the same with the resource allocation of the 1^{st} time transmission. If the checking result of the data packet is correct in the sponsor relay station but wrong in the base station, then transmission resources are allocated, by the base station, to the sponsor relay station, one or more assistant relay stations and the destination network equipment for the purpose of retransmission of the data packet; or transmission resources are allocated only to the sponsor relay station for the purpose of retransmission of the data packet.

During the passive hybrid automatic retransmission, when error occurs to the checking result of the data packet in the base station, then transmission resources are allocated, by the base station, to the source network equipment, the sponsor relay station, one or more assistant relay stations and the destination network equipment for the purpose of retransmission of the data packet, and the resource allocation of retransmission is the same with the resource allocation of the 1^{st} time transmission.

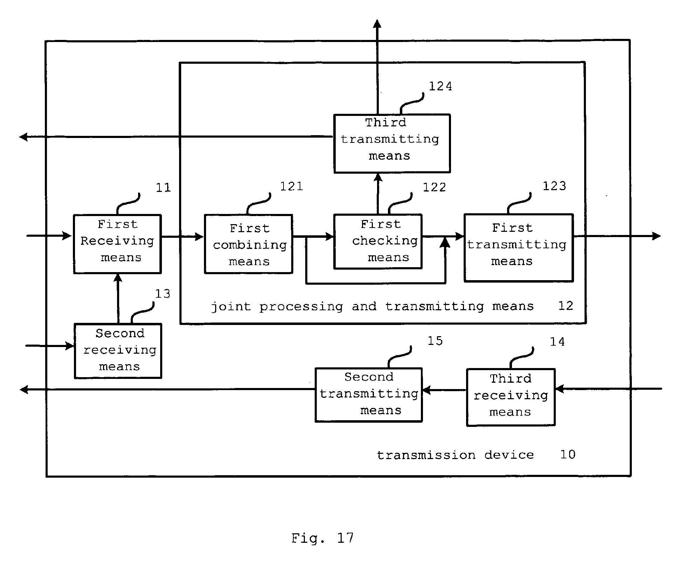

Figure 17 shows a function block diagram of a transmission device for data transmission in sponsor relay station in wireless network according to one embodiment of the present invention. The transmission device 10 comprises a first receiving means 11, a joint processing and transmitting means 12, a second receiving means 13, a second transmitting means 15 and a third receiving means 14. Wherein, the joint processing and transmitting means 12 further comprises a first combining means 121, a first checking means 122, a first transmitting means 123 and a third transmitting means 124. For simplicity, the transmission device 10 includes some sub means in preferable embodiments. It is to be understood by those skilled in the art that only the first receiving means 11 and the joint processing and transmitting means 12 are necessary means for implementation of present invention, and other means are optional.

Firstly, the first receiving means 11 receives a plurality of duplicates of the data packet from the source network equipment via a plurality of different transmission paths, that is, the first receiving means 11 receives the duplicate of the data packet directly from the source network equipment, and receives one or more duplicates of the data packet from the source network equipment via the one or more assistant relay stations.

Next, the joint processing and transmitting means 12 applies a joint processing to the plurality of duplicates of the data packet, and transmits the result of the joint processing to the corresponding network equipment.

Herein, the source network equipment and the destination network equipment may be any one of the pairs of a mobile station and a base station, a mobile station and a relay station, a relay station and a mobile station, a relay station and a relay station, a relay station and a base station, a base station and a mobile station, a base station and a relay station.

For single-time transmission of the data packet, operations of the joint processing and transmitting means 12 can be carried out by the following 2 sub means: the first combining means 121 and the first transmitting means 123. The first combining means 121 applies a combination processing to the plurality of duplicates of the data packet to generate a combined duplicate, and the first transmitting means 123 transmits the combined duplicate to the destination network equipment.

During the hybrid automatic retransmission, if the data packet is received wrongly by the sponsor relay station or the destination network equipment, then resources are allocated, by the base station, to the source network equipment for the retransmission of the data packet. Preferably, the second receiving means 13 receives a retransmission indication message, for indicating the data packet to be retransmitted by the source network equipment, from the base station. The first receiving means 11 receives again the data packet via corresponding transmission resources according to the retransmission indication message received by the first receiving means 13 and the information about the transmission resources allocated by the base station. And during retransmission, the joint processing and transmitting means 12 applies a joint processing to the received plurality of duplicates of the data packet of the retransmission and the plurality of duplicates of the data packet of previous one or more transmission, and transmits the result of the joint processing to the corresponding network equipment. If the sponsor relay station receives correctly but the destination receives wrongly, then resources are allocated, by the base station, to the first transmitting means 123 of the sponsor relay station for the retransmission of the data packet. As an alternative embodiment, resources may also be allocated, by the base station, to both the sponsor relay station and the one or more assistant relay stations for the retransmission of the data packet.

During the passive hybrid automatic retransmission, the corresponding network equipment includes the destination network equipment. Operations of the joint processing and transmitting means 12 can be carried out by the following 2 sub means: the first combining means 121 and the first transmitting means 123. The first combining means 121 applies a combination processing to the plurality of duplicates of the data packet to generate a combined duplicate, and the first transmitting means 123 transmits the combined duplicate to the destination network equipment.

And checking is applied to the combined packet after the destination network equipment receives the combined duplicate of the data packet. Preferably, the destination network equipment also receives one or more duplicates of the data packet from the one or more assistant station, then a combination processing is applied to the one or more duplicates and the combined duplicate from the sponsor relay station to generate a combined data packet, and checking is applied to the combined data packet, then a receiving indication message for indicating the checking result is sent to the sponsor relay station.

After the third receiving means 14 receives the receiving indication message, for indicating whether the data packet is received correctly by the destination network equipment, from the destination network equipment, then, the second transmitting means 15 sends the receiving indication message to the source network equipment.

When the source network equipment and the destination network equipment are correspondingly any one of the pairs of a mobile station and a base station, a mobile station and a relay station, a relay station and a mobile station, a relay station and a relay station, a relay station and a base station, preferably, after the third receiving means 14 receives the receiving indication message, for indicating the checking result of the data packet, from the destination network equipment, then if the receiving indication message indicates a correct checking result for the destination network equipment, it is forwarded to the source network equipment by the second transmitting means 15. If the receiving indication message indicates a wrong checking result for the destination network equipment, the sponsor relay station determines whether the local checking result of the data packet within the sponsor relay station itself is correct or not. If the local checking result of the data packet is correct, the receiving indication message indicating a checking error of the data packet of the destination network equipment is changed into a receiving indication message indicating a correct checking result of the data packet of the destination network equipment, and sent to the source network equipment by the second transmitting means 15, which makes the source network equipment believe that the destination network equipment receives correctly and there is no need to retransmit the data packet. Retransmission will be conducted only by the sponsor relay station and the assistant relay station.

During the active hybrid automatic retransmission, the corresponding network equipment includes a source network equipment, a destination network equipment and a base station, then operations of the joint processing and transmitting means 12 can be carried out by the following 4 sub means: the first combining means 121, the first checking means 122, the first transmitting means 123 and the third transmitting means 124. The first combining means 121 applies a combination processing to the plurality of duplicates of the data packet to generate a combined duplicate ; next, the first checking means 122 applies a checking to the combined duplicate of the data packet to obtain a checking result which indicates whether the sponsor relay station receives the data packet correctly or not; finally, the third transmitting means 124 transmits the checking result to the source network equipment and the base station and the first transmitting means 123 transmits the combined duplicate to the destination network equipment. It should be noted that the transmission of the first transmitting means 123 and the third transmitting means 124 can be performed without particular order. As a variation, whether the transmission of the third transmitting means 124 can be performed or not depending on the checking result of the first checking means 122. That is, if the checking result of the first checking means 122 indicates that the sponsor relay station receives the data packet correctly, consequently, the combined duplicate of the data packet is transmitted, by the third transmitting means 124, to the destination network equipment.

It should be noted that, operation steps of each sub means of the transmission device 10 is described from the function perspective as above. The sequence order of the operations for each sub means may vary with a different protocol of data link layer, a different physical layer protocol of the wireless network or a different uplink sub-frame scheduling of the wireless network.

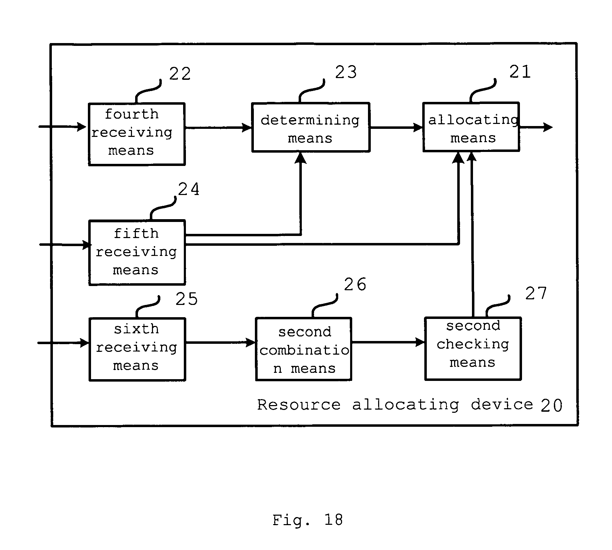

Figure 18 shows a function block diagram of resource allocating device used for resources allocation for data transmission in base station in wireless network according to one embodiment of the present invention. The resource allocating device 20 comprises an allocating means 21, a fourth receiving means 22, a determining means 23, a fifth receiving means 24, a sixth receiving means 25, a second combining means 26 and a second checking means 27. For simplicity, the resource allocating device 20 includes some sub means for some preferable embodiments. Aaccording to the teachings of the present invention, it is to be understood by those skilled in the art that only the allocating means 21 is a necessary means for implementation of present invention, and other sub means are optional.

According to one embodiment of the present invention, the allocating means 21 is used for allocating transmission resources respectively for the source network equipment, the sponsor relay station, one or more assistant relay stations and the destination network equipment so that via the allocated resources, the source network equipment transmits a duplicate of the data packet to the sponsor relay station and one or more assistant relay stations; and by utilizing the allocated transmission resource, the one or more assistant relay stations transmits the data packet duplicate, received from the source network equipment, to the sponsor relay station; after the sponsor relay station receives the plurality of duplicates of the data packet, it applies a joint processing to the plurality of duplicates of the data packet, and transmits the result of the joint processing to the corresponding network equipment by utilizing the allocated transmission resource.

Preferably, the allocating means 21 is used for allocating transmission resources respectively for the source network equipment, the sponsor relay station, one or more assistant relay stations and the destination network equipment so that via the allocated resources, the source network equipment transmits a duplicate of the data packet to the sponsor relay station and one or more assistant relay stations; and by utilizing the allocated transmission resource, the one or more assistant relay stations transmits the data packet duplicate, received from the source network equipment, to the sponsor relay station and the destination network equipment; after the sponsor relay station receives the plurality of duplicates of the data packet, it applies a joint processing to the plurality of duplicates of the data packet, and transmits the result of the joint processing to the corresponding network equipment by utilizing the allocated transmission resource.

Reference may be made to Fig.15 for the timing order of the transmission resources allocated by the allocating means 21.

Herein, the source network equipment and the destination network equipment may be any one of the pairs of a mobile station and a base station, a mobile station and a relay station, a relay station and a mobile station, a relay station and a relay station, a relay station and a base station, a base station and a mobile station, a base station and a relay station.

During the active hybrid automatic retransmission, the fourth receiving means 22 also receives, from the sponsor relay station, a receiving indication message for indicating whether the sponsor relay station receives the data packet from the source network equipment correctly. If the sponsor relay station does not receive the data packet from the source network equipment correctly, then transmission resources are allocated, by the allocating means 21, to the source network equipment, the sponsor relay station, one or more assistant relay stations and the destination network equipment for the purpose of retransmission of the data packet, and the resource allocation of retransmission is the same with the resource allocation of the 1^{st} time transmission.

When the sponsor relay station receives the data packet from the source network equipment correctly, then, according to the receiving indication message, from the destination network equipment and received by the fifth receiving means 24, for indicating the correctness of the checking result of the data packet of the destination network equipment, the allocating means 21 determines whether the destination network equipment receives the data packet correctly. Certainly, the receiving indication message is unnecessarily to be received by the fifth receiving means 24, if the base station is the destination network equipment itself; and if the destination network equipment does not receive the data packet correctly, then transmission resources are allocated, by the allocating means 21, to the sponsor relay station, one or more assistant relay stations for the purpose of retransmission of the data packet.

During the period of passive hybrid automatic retransmission, when the destination network equipment is a mobile station or a relay station, the fifth receiving means 24 receives, from the destination network equipment, a receiving indication message for indicating whether the destination network equipment receives the data packet from the source network equipment correctly. If the destination network equipment does not receive the data packet from the source network equipment correctly, then transmission resources are allocated by the allocating means 21 for the purpose of retransmission of the data packet, and the resource allocation of retransmission is the same with the resource allocation of the 1^{st} time transmission.

When the base station is the destination network equipment, it is necessary for the sixth receiving means 25, the second combining means 26 and the second checking means 27 to perform the following operations shown in Fig.16.

Firstly, the sixth receiving means 25 receives one or more duplicates of the data packet from the one or more assistant relay stations; and receives a combined duplicate of the data packet from the sponsor relay station; then, the second combining means 26 applies a further combination processing to the received one or more duplicates of the data packet from the one or more assistant relay stations and the received combined duplicate of the data packet from the sponsor relay station to generate a combined data packet; the combined data packet is checked to obtain a checking result by the second checking means 27. If error occurs to the checking result of the combined data packet, then transmission resources are allocated, by the allocating means 21, for the retransmission of the data packet.

It should be noted that during the period of retransmission, after the second combination means 26 applies a combination processing to the one or more duplicates, received from the one or more assistant relay stations during the retransmission, of the data packet and the combined duplicate of the data packet received from the sponsor relay station to generate a combined data packet, a further combination processing is applied, by the second combining means 26, to the above combined data packet and the duplicate combined from the plurality of duplicates of data packet received during last one or more transmission.

In particular, specific operation of the transmission resource allocation performed by the allocating means 21 in the passive hybrid automatic retransmission is different from that in active hybrid automatic retransmission.

During the active hybrid automatic retransmission, when error occurs to the checking result of the data packet in the base station, if, at the same time, error also occurs to the checking result of the data packet in the sponsor relay station, then transmission resources are allocated, by the allocating means 21, to the source network equipment, the sponsor relay station, one or more assistant relay stations and the destination network equipment for the purpose of retransmission of the data packet, and the retransmission resource is allocated in the same with the resource allocation of the 1^{st} time transmission. If the checking result of the data packet is correct in the sponsor relay station but wrong in the base station, then transmission resources are allocated, by the allocating means 21, to the sponsor relay station, one or more assistant relay stations and the destination network equipment for the purpose of retransmission of the data packet; Or transmission resources are allocated, by the allocating means 21, only to the sponsor relay station for the purpose of retransmission of the data packet.

During the passive hybrid automatic retransmission, when error occurs to the checking result of the data packet in the base station, then transmission resources are allocated, by the allocating means 21, to the source network equipment, the sponsor relay station, one or more assistant relay stations and the destination network equipment for the purpose of retransmission of the data packet, and the resources of retransmission are allocated in the same way that the resources are allocated in the 1^{st} time transmission.

The embodiments of the present invention have been described above. It is to be understood by those skilled in the art that the present invention is not limited to the above specific embodiments, and various modifications or amendments can be made without departing from the scope and spirit of the scope of the attached claims.

## Claims

1. A method for transmitting data in a sponsor relay station in the wireless network, comprising following steps:
b. receiving a plurality of duplicates of the data packet from a source network equipment via a plurality of different transmission paths;
c. applying a joint processing to the plurality of duplicates of the data packet, and transmitting the result of the joint processing to a corresponding network equipment.

2. A method according to claim 1, further comprising following step before the Step b:
a. receiving, from a base station, a retransmission indication message for indicating the data packet to be retransmitted by the source network equipment.

3. A method according to claim 2, wherein the step c further comprises following step:
applying a joint processing to the received plurality of duplicates of the data packet and a plurality of duplicates of the data packet of previous one or more transmission, and transmitting the result of the joint processing to the corresponding network equipment.

4. A method according to any of claims 1 to 3, wherein the corresponding network equipment includes a destination network equipment, the step c further comprises following steps:
c11. applying a combination processing to the plurality of duplicates of the data packet to obtain a combined duplicate of the data packet;
c12. transmitting the combined duplicate of the data packet to the destination network equipment.

5. A method according to claim 4, further comprising following steps:
- receiving, from the destination network equipment, a receiving indication message for indicating whether the destination network equipment receives the data packet correctly;
- sending the receiving indication message to the source network equipment.

6. A method according to any of claims 1 to 3, wherein the corresponding network equipment includes a destination network equipment, the source network equipment and a base station, and the step c further comprises following steps:
c21. applying a combination processing to the plurality of duplicates of the data packet to obtain a combined duplicate of the data packet;
c22. checking the combined duplicate of the data packet to obtain a checking result which indicates whether the sponsor relay station receives the data packet correctly;
c23. transmitting the checking result to the base station and the source network equipment;
wherein the method further comprises the following step after the step c22:
- transmitting the combined duplicate of the data packet to the destination network equipment when the checking result indicates that the sponsor relay station receives the data packet correctly.

7. A method according to any of claims 1 to 6, wherein the step b further comprises following steps:
- receiving a duplicate of the data packet directly from the source network equipment;
- receiving one or more duplicates of the data packet from the source network equipment via the one or more assistant relay stations.

8. A method according to claim 5 or 6, wherein the source network equipment and the destination network equipment include any one of the following pairs of network equipments: a mobile station and a base station, a mobile station and a relay station, a relay station and a mobile station, a relay station and a relay station, a relay station and a base station, a base station and a mobile station, a base station and a relay station.

9. A method for allocating resource for data transmission in the base station in the wireless network, comprising the following steps:
i. allocating transmission resources respectively for a source network equipment, a sponsor relay station, one or more assistant relay stations and a destination network equipment, in order that
with the allocated resources, the source network equipment transmits a duplicate of data packet to the sponsor relay station and the one or more assistant relay stations, and by utilizing the allocated transmission resource, the one or more assistant relay stations transmits the duplicate, received from the source network equipment, of the data packet to the sponsor relay station; after the sponsor relay station receives the plurality of duplicates of the data packet, the sponsor relay station applies a joint processing to the plurality of duplicates of the data packet, and transmits result of the joint processing to a corresponding network equipment by utilizing the allocated transmission resources.

10. A method according to claim 9, wherein the step i further comprises the following step:
- allocating transmission resources respectively for the source network equipment, the sponsor relay station, the one or more assistant relay stations and the destination network equipment, in order that
with the allocated resources, the source network equipment transmits a duplicate of data packet to the sponsor relay station and the one or more assistant relay stations, and by utilizing the allocated transmission resource, the one or more assistant relay stations transmits the duplicate, received from the source network equipment, of the data packet to the sponsor relay station and the destination network equipment; after the sponsor relay station receives the plurality of duplicates of the data packet, the sponsor relay station applies a joint processing to the plurality of duplicates of the data packet, and transmits result of joint processing to the corresponding network equipment by utilizing the allocated transmission resources.

11. A method according to claim 9 or 10, further comprising following steps:
- receiving, from the sponsor relay station, a receiving indication message for indicating whether the sponsor relay station receives the data packet from the source network equipment correctly;
if the sponsor relay station does not receive the data packet from the source network equipment correctly, then performing the step i.

12. A method according to claim 11, further comprising following steps:
- if the sponsor relay station receives the data packet from the source network equipment correctly, determining whether the destination network equipment receives the data packet correctly.
- if the destination network equipment does not receive the data packet correctly, transmission resources are allocated, by the base station, respectively for the sponsor relay station and the one or more assistant relay stations for retransmission of the data packet.

13. A method according to any of claims 9 to 12, wherein the source network equipment and the destination network equipment includes any one of the following pairs of network equipment: a mobile station and a base station, a mobile station and a relay station, a relay station and a mobile station, a relay station and a relay station, a relay station and a base station, a base station and a mobile station, a base station and a relay station.

14. A method according to claim 9 or 10, wherein the destination network equipment includes a mobile station or a relay station, the method further comprising following steps:
- receiving, from the destination network equipment, a receiving indication message for indicating whether the destination network equipment receives the data packet from the source network equipment correctly;
if the destination network equipment does not receive the data packet from the source network equipment correctly, then performing the step i.

15. A method according to claim 9 or 10, wherein the destination network equipment includes a base station, the method further comprising following steps before the step i:
- receiving one or more duplicates of the data packet from the one or more assistant relay stations;
- receiving a combined duplicate of the data packet from the sponsor relay station;
- applying a further combination processing to the one or more duplicates of the data packet received from the one or more assistant relay stations and received the combined duplicate of the packet from the sponsor relay station to generate a combined data packet;
- checking the combined data packet;
- performing the step i, if the checking result of the combined data packet is wrong.

16. A transmission device for data transmission in a sponsor relay station in the wireless network, comprising:
a first receiving means configured to receive a plurality of duplicates of data packet from a source network equipment via a plurality of different transmission paths;
a joint processing and transmitting means configured to apply a joint processing to the plurality of duplicates of the data packet, and transmitting the result of the joint processing to corresponding network equipment.

17. A transmission device according to claim 16, further comprising:
a second receiving means configured to receive a retransmission indication message for indicating the data packet to be retransmitted by the source network equipment from a base station.

18. A transmission device according to claim 17, wherein the joint processing and transmitting means is further configured to:
- apply an joint processing to the received plurality of duplicates of the data packet and plurality of duplicates of the data packet of previous one or more transmission, and transmit the result of the joint processing to the corresponding network equipment.

19. A transmission device according to any of claims 16 to 18, wherein the corresponding network equipment includes a destination network equipment, and the joint processing and transmitting means comprises:
a first combining means configured to apply a combination processing to the plurality of duplicates of the data packet to generate a combined duplicate of the data packet;
a first transmitting means configured to transmit the combined duplicate of the data packet to the destination network equipment.

20. A transmission device according to claim 19, further comprising:
a third receiving means configured to receive a receiving indication message for indicating whether the destination network equipment receives the data packet correctly from the destination network equipment;
a second transmitting means configured to send the receiving indication message to the source network equipment.

21. A transmission device according to claim 19 or 20, wherein the corresponding network equipment further includes a source network equipment and a base station, the joint processing and transmitting means further comprises:
a first checking means configured to apply a checking to the duplicate, combined by the first combining means, of the data packet to obtain a checking result which indicates whether the sponsor relay station receives the data packet correctly;
a third transmitting means configured to transmit the checking result to the source network equipment and the base station;
wherein the first transmitting means is further configured to transmit the combined duplicate of the data packet to the destination network equipment when the checking result indicates that the sponsor relay station receives the data packet correctly.

22. A transmission device according to any of claims 15 to 21, wherein the first receiving means is further configured to:
- receive a duplicate of the data packet directly from the source network equipment;
- receiving one or more duplicates of the data packet from the source network equipment via the one or more assistant relay stations.

23. A transmission device according to claim 20 or 21, wherein the source network equipment and the destination network equipment includes any one of the following pairs of network equipments: a mobile station and a base station, a mobile station and a relay station, a relay station and a mobile station, a relay station and a relay station, a relay station and a base station, a base station and a mobile station, a base station and a relay station.

24. A resource allocating device for allocating resources for data transmission in the base station in the wireless network, comprising:
allocating means configured to allocate transmission resources respectively for a source network equipment, a sponsor relay station, one or more assistant relay stations and a destination network equipment, in order that
with the allocated resources, the source network equipment transmits a duplicate of the data packet to the sponsor relay station and the one or more assistant relay stations, and by utilizing the allocated transmission resource, the one or more assistant relay stations transmits duplicate, received from the source network equipment, of the data packet to the sponsor relay station; after the sponsor relay station receives plurality of duplicates of the data packet, the sponsor relay station applies the joint processing to the plurality of duplicates of the data packet, and transmits result of the joint processing to a corresponding network equipment by utilizing the allocated transmission resources.

25. A resource allocating device according to claim 24, wherein the allocating means is further configured to:
- allocate transmission resources respectively for the source network equipment, the sponsor relay station, the one or more assistant relay stations and the destination network equipment, in order that
with the allocated resources, the source network equipment transmits a duplicate of data packet to the sponsor relay station and the one or more assistant relay stations, and by utilizing the allocated transmission resource, the one or more assistant relay stations transmits the duplicate, received from the source network equipment, of the data packet to the sponsor relay station and the destination network equipment; after the sponsor relay station receives the plurality of duplicates of the data packet, the sponsor relay station applies a joint processing to the plurality of duplicates of the data packet, and transmits result of the joint processing to the corresponding network equipment by utilizing the allocated transmission resources.

26. A resource allocating device according to claim 24 or 25, further comprising:
a fourth receiving means configured to receive, from the sponsor relay station, a receiving indication message for indicating whether the sponsor relay station receives the data packet from the source network equipment correctly;
if the sponsor relay station does not receive the data packet from the source network equipment correctly, then transmission resources are allocated, by the allocating means, to the source network equipment, the sponsor relay station, the one or more assistant relay stations and the destination network equipment for the purpose of retransmission of the data packet.

27. A resource allocating device according to claim 26, further comprising:
a determining means configured to determine whether the destination network equipment receives the data packet correctly when the sponsor relay station receive the data packet from the source network equipment correctly;
wherein the allocating means is further configured to:
- allocate transmission resources for the sponsor relay station, the one or more assistant relay stations for the purpose of retransmission of the data packet.

28. A resource allocating device according to any of claims 24 to 27, wherein the source network equipment and the destination network equipment includes any one of the following pairs of network equipment: a mobile station and a base station, a mobile station and a relay station, a relay station and a mobile station, a relay station and a relay station, a relay station and a base station, a base station and a mobile station, a base station and a relay station.

29. A resource allocating device according to claim 24 or 25, wherein the destination network equipment includes a mobile station or a relay station, the resource allocating device further comprising:
a fifth receiving means configured to receive, from the destination network equipment, a receiving indication message for indicating whether the destination network equipment receives the data packet from the source network equipment correctly;
wherein the allocating means is further configured to:
- allocate transmission resources for the source network equipment,
the sponsor relay station, the one or more assistant relay stations and the destination network equipment for the purpose of retransmission of the data packet, if the destination network equipment does not receive the data packet from the source network equipment correctly.

30. A resource allocating device according to claim 24 or 25, wherein the destination network equipment includes a mobile station, the resource allocating device further comprising:
a sixth receiving means configured to receive one or more duplicates of the data packet from the one or more assistant relay stations; and receive a combined duplicate of the data packet from the sponsor relay station;
a second combining means configured to apply a combination processing to the received one or more duplicates of the data packet from the one or more assistant relay stations and the received combined duplicate of the data packet from the sponsor relay station to generate a combined data packet;
a second checking means configured to check the combined data packet;
wherein the allocating means is further configured to:
- allocate, if the checking result of the combined data packet is wrong, transmission resources respectively for the source network equipment, the sponsor relay station, the one or more assistant relay stations and the destination network equipment, in order that
with the allocated resources, the source network equipment transmits a duplicate of data packet to the sponsor relay station and the one or more assistant relay stations, and by utilizing the allocated transmission resource, the one or more assistant relay stations transmits the duplicate, received from the source network equipment, of the data packet to the sponsor relay station; after the sponsor relay station receives the plurality of duplicates of the data packet, the sponsor relay station applies a joint processing to the plurality of duplicates of the data packet, and transmits result of the joint processing to the corresponding network equipment by utilizing the allocated transmission resources.
